Europäisches Patentamt

European Patent Office

Office européen des brevets

(11) Veröffentlichungsnummer: **0 226 746**
**B1**

(12) **EUROPÄISCHE PATENTSCHRIFT**

(45) Veröffentlichungstag der Patentschrift:
04.10.89

(21) Anmeldenummer: 86114473.1

(22) Anmeldetag: 18.10.86

(51) Int. Cl.⁴: **F 16 B 19/04,** B 21 J 15/32,
B 23 P 19/00

(54) **Niet.**

(30) Priorität: 21.12.85 DE 3545655

(43) Veröffentlichungstag der Anmeldung:
01.07.87 Patentblatt 87/27

(45) Bekanntmachung des Hinweises auf die Patenterteilung:
04.10.89 Patentblatt 89/40

(84) Benannte Vertragsstaaten:
CH FR GB IT LI

(56) Entgegenhaltungen:
GB-A-1 295 291
US-A-1 863 314
US-A-3 528 466
US-A-4 285 265

(73) Patentinhaber: **Trumpf Grüsch AG, Grüsch (CH)**

(72) Erfinder: **Herb, Eugen, Dipl. Ing., Baumhalde 22,
D-7257 Ditzingen (DE)**

(74) Vertreter: **Schmid, Berthold, Patentanwälte Dipl.-
Ing. B. Schmid Dr. Ing. G. Birn
Falbenhennenstrasse 17, D-7000 Stuttgart 1 (DE)**

**Beschreibung**

Die Erfindung bezieht sich auf einen Niet mit einem kreiszylindrischen Schaft und einem diesen quer zur seiner Längsachse überragenden Kopf mit in Umfangsrichtung versetzt angeordneten, bis an den Schaft heranreichenden Kopfumfangs-Teilflächen. Niete sind in der Technik schon seit Jahrzehnten bekannt und gebräuchlich. In vielen Fällen steckt man sie von Hand in die fluchtenden Bohrungen der beiden miteinander zu verbindenden Bauteile oder Bleche. Dieses Einsetzen ist zeitaufwendig und deshalb teuer. In manchen Fertigungszweigen wird sehr viel genietet, beispielsweise im Flugzeugbau. Dort ist ein Einsetzen der Niete von Hand nicht mehr zeitgemäß. Eine automatische Nietzuführung ist dann problemlos, wenn man Niete ohne radial überstehenden Kopf, also bolzenförmige Niete verwendet. Derartige Niete ohne ausgeprägten Kopf sind aber nicht überall zu gebrauchen oder wünschenswert.

Übliche Nietköpfe haben die Gestalt einer Kugelkalotte. Durch die US-A-4 285 265 wurde ein solcher Niet vorgeschlagen, bei welchem der Nietkopf mit in Umfangsrichtung versetzt angeordneten, bis an den Schaft heranreichenden Kopfumfangs-Teilflächen versehen ist. Es handelt sich dort um einen Hohlniet, der sich besonders leicht wieder entfernen läßt. Wenn man nämlich diesen Niet ausbohrt, wobei ein Bohrer Verwendung findet, der ein dem Schaftaußendurchmesser entsprechendes Loch bohrt, so zerfällt der Kopf dieses beispielsweise mit zwei solchen Teilflächen ausgestatteten Niets aufgrund der nutartigen Kopfumfangs-Teilflächen in dem Moment in zwei Teilstücke, in dem der Bohrer den Schaft erreicht hat.

Die Aufgabe der Erfindung besteht nun darin, einen Niet der eingangs beschriebenen Art so weiterzubilden, daß er trotz seines den Schaft radial überragenden Kopfes für eine gute und sichere automatische Nietzuführung und möglichst auch einen automatischen Nietvorgang geeignet ist, wobei die Nietzuführung zumindest eine Bewegung des Niets in Längsrichtung seines Schaftes ermöglichen soll.

Zur Lösung dieser Aufgabe wird erfindungsgemäß vorgeschlagen, daß der Niet gemäß dem Oberbegriff des Anspruchs 1 entsprechend dem kennzeichnenden Teil dieses Anspruchs ausgebildet ist. Bei diesem Niet bilden die Kopfumfangs-Teilflächen Führungsflächen, aufgrund derer er entlang einer entsprechend ausgebildeten Führung verschoben werden kann, was ihn zur Verwendung in einer automatischen Nietzuführung geeignet macht. Als Nietführung kommen beispielsweise Führungsstangen, Führungsleisten oder dgl. infrage, deren Querschnittsform an die Form der Kopfumfangs-Teilflächen angeglichen und deren Seitenabstand dem Seitenabstand dieser Teilflächen angepasst ist. Damit wird zumindest der Nietschaft in Längsrichtung geführt. Die Längsführung kann sich aber bis in den Kopf hinein erstrecken. In letzterem Falle erreicht man eine längere und damit bessere Führung. Zwischen dem Nietschaft und den Führungsleisten oder dgl. ist selbstverständlich das notwendige aber nicht allzu große Spiel vorgesehen. Die Führung erfolgt jedoch, wie gesagt, nicht nur entlang der Mantellinie des Schaftes, vielmehr kann sich diese Mantellinie in die Kopfumfangs-Teilfläche hinein erstrecken und so die Führung verlängern. Aufgrund der gewählten Kopf form ist auch eine Nietzuführung quer zur Schaftlängsachse möglich.

Eine Weiterbildung der Erfindung sieht vor, daß die Führungsflächen gleichmäßig am Kopfumfang verteilt, also im Falle von vier Führungsflächen, jeweils um 90° in Umfangsrichtung versetzt sind. Die Stirnfläche des Kopfes ist dabei viereckig bzw. quadratisch. Die Ecken können gegebenenfalls etwas abgerundet sein.

Wenn das freie Schaftende in Weiterbildung der Erfindung scharfkantig ausgebildet ist und der Niet eine große Härte aufweist, so kann man ihn als sogenannten Stanzniet verwenden. Ein Stanzniet benötigt kein gestanztes Loch, vielmehr wird er durch das Material der beiden miteinander zu verbindenden Teile, beispielsweise durch zwei Bleche, mit seinem freien Schaftende voran in der Art eines Stanzstempels hindurchgestoßen. Gleichzeitig mit der Bildung der beiden kongruenten Stanzlöcher wird der Niet eingesetzt. Die Härte eines solchen Stanzniets richtet sich in erster Linie nach dem Material der miteinander zu vernietenden Bleche oder dgl. Es handelt sich hierbei vorzugweise um Aluminiumbleche bzw. aus Aluminiumblech gefertigte Teile. Insbesondere in diesem Falle ist es zweckmäßig, wenn die Härte des Stanzniets etwa der doppelten Härte von Aluminium oder dgl. entspricht.

Da der Niet forderungsgemäß einen Kopf aufweist, kann man das überstehende Schaftende bleibend verformen, um dadurch die Nietverbindung herzustellen.

Es ist eine weitere Aufgabe der Erfindung, eine Nietführung an einer Nietvorrichtung für Niete der vorstehend genannten Art zu schaffen. Zur Lösung dieser Aufgabe wird erfindungsgemäß vorgeschlagen, daß diese Nietführung dadurch gekennzeichnet ist, daß mindestens vier Längskanten oder Mantellinien an Führungsstangen, Führungsleisten oder dergleichen vorgesehen sind, die zur Führung eines Nietschaftes - insbesondere gleichmäßig - am Umfang eines gedachten Kreiszylinders angeordnet sind, wobei die zwischen benachbarten Führungsstangen, Führungsleisten oder dgl. befindlichen, außerhalb des gedachten Zylinders gelegene Zwischenräume Bewegungsbahnen für die den Nietschaft radial überragenden Kopfteile des Niets bilden, und daß die Führungsstangen, Führungsleisten oder dgl. zumindest ein Teil eines Führungskörpers sind.

Die erwähnten Führungsstangen oder dgl. werden in geeigneter Weise miteinander verbunden bzw. an einer Nietvorrichtung oder Nietmaschine befestigt. Die radial überstehenden Teile des Nietkopfes erstrecken sich dabei jeweils in den gegebenenfalls nur seitlich begrenzten Zwischenraum zwischen zwei benachbarten Führungsstangen oder dgl. Im Falle von Führungsleisten kann ein beispielsweise geschlossener Kanal vorhanden sein, entlang dem die Niete zur Nietstelle befördert werden. Ins Innere dieses zum Beispiel zylindrischen Kanals ragen die Führungsleisten hinein. Der Kanalquerschnitt muß so gewählt werden, daß die zwischen benachbarte Führungsleisten oder dgl. greifenden Kopfteile ausreichend Platz finden.

Die Erfindung wird nachstehend anhand der Zeichnung näher erläutert. Die Zeichnung zeigt Ausführungsbeispiele der Erfindung. Hierbei stellen dar:

Fig. 1: eine Seitenansicht einer ersten Variante eines Niets,
Fig. 2: eine Draufsicht auf den Niet der Figur 1,
Fig. 3: die Seitenansicht einer zweiten Ausführung eines Niets,
Fig. 4: eine Draufsicht auf den Niet der Figur 3,
Fig. 5: perspektivisch einen Ausschnitt aus einer Nietführung.

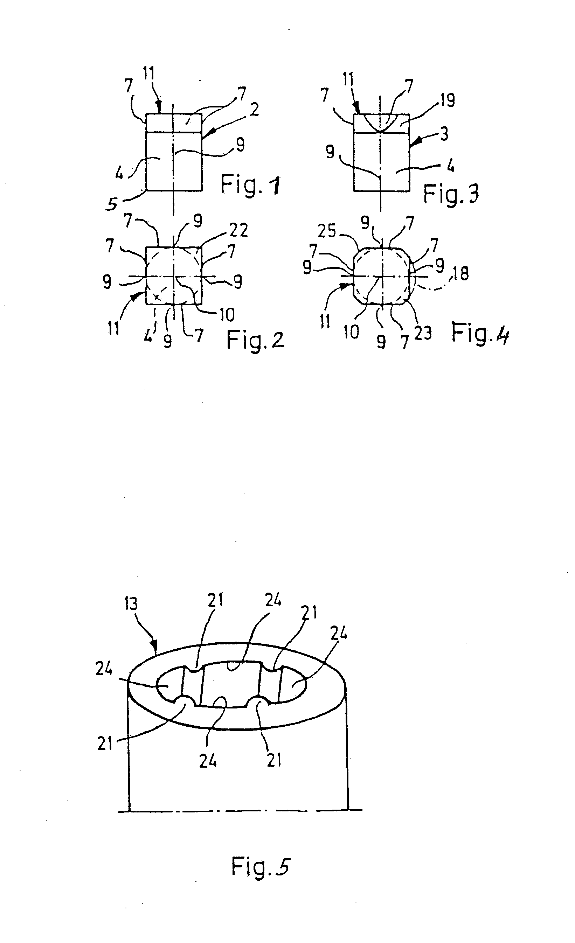

Sowohl der Niet 2 der Fig. 1 als auch der Niet 3 der Figur 3 besitzen jeweils einen kreiszylindrischen Schaft 4. Außerdem kann wahlweise bei jeder dieser Ausführungen die umlaufende Kante am freien Schaftende als Schneidkante 5 ausgebildet sein, so daß dieser Niet als Stanzniet zu gebrauchen ist. Voraussetzung ist dabei allerdings eine ausreichende Härte in Bezug auf das mit diesem Niet zu stanzende Material.

Bei den Ausführungsbeispielen gemäß Figuren 2 und 4 ist ein Teil des Kopfumfanges durch mindestens vier in Umfangsrichtung versetzte Führungsflächen 7 gebildet. Die Führungsflächen 7 reichen jeweils bis zu einer Mantellinie 9 des Schaftes 4. Dabei erstrecken sich die Führungsflächen 7 in Richtung der Mantellinien 9, also senkrecht zur Blattebene. Auf diese Weise ist gewährleistet, daß die Mantellinie 9 vom Kopf 11 in radialer Richtung nicht überragt wird. Dadurch ist es auch möglich, den Niet mit der Längsachse 10 in einer Nietführung 13 einer nicht näher dargestellten Nietvorrichtung ausschließlich oder zumindest vorwiegend am Schaft 4 in Längsrichtung zu führen, wobei die Berührung oder Zuordnung der Längsführung zum Schaft 4 im Bereich der Mantellinien 9 erfolgt.

Beim Ausführungsbeispiel der Fign. 1 und 2 ist der Kopf 11 als Mehrkantprisma, insbesondere als Vierkantprisma, ausgebildet.

Demgegenüber besitzt der Kopf 11 des Ausführungsbeispiels nach den Fign. 3 und 4 die Gestalt eines auf dem Kopf stehenden Kegelstumpfes, wobei der kleinere Kegelstumpf-Durchmesser dem Schaft 4 zugeordnet ist und diesem Schaftdurchmesser entspricht. Zur Bildung der Führungsflächen 7 am Kopfumfang sind beim Ausführungsbeispiel nach Fig. 4 in Gedanken vier Abschnitte 18 in senkrecht zur Blattebene geführten Schnitten abgetrennt. In Fig. 4 ist zum besseren Verständnis dieser Form einer dieser gedachten abgetrennten Abschnitte 18 mit strichpunktierten Linien eingezeichnet. Der Kegelstumpf selbst ist in Fig. 3 mit 19 bezeichnet. Diese Kopfform ist aber nicht notwendigerweise durch Abtrennen von Abschnitten 18 entstanden, vielmehr kann der Kopf aus einer beliebigen anderen Gestalt, insbesondere durch Kaltverformung, in die aus den Fign. 3 und 4 ersichtliche Form gepresst werden. Analoges kann auch für das Ausführungsbeispiel nach Fig. 1 gelten.

Wie bereits erläutert, soll dieser Niet zur Verwendung in einer automatischen Nietvorrichtung geeignet sein, die eine Nietführung 13 aufweist. Eine Führung des Nietschafts 4 hat gegenüber einer Führung lediglich des Kopfes den Vorteil, daß aufgrund der größeren Länge des Schaftes im Vergleich zum Kopf ein verkantungsfreies Führen besser gewährleistet ist.

In der Nietführung 13 gemäß Fig. 5 läßt sich ein Niet des Typs der Fign. 1 und 3 gut führen. Dabei wird ausschließlich oder zumindest in erster Linie nur der Schaft 4 geführt. Die Führungsleisten 21 liegen am Schaft, genauer gesagt, an den Mantellinien 9 des Schaftes 4 mit entsprechendem Spiel an. Die "Ecken" 22 bzw. 23, also die radial vorspringenden Kopfteile, ragen in die Zwischenräume 24 zwischen benachbarten Führungsleisten 21 hinein. Die Längsführung kann beispielsweise in der Art eines Rohres mit über den inneren Rohrmantel vorstehenden Führungsleisten 21 ausgebildet sein. Form und Stärke der Führungsleisten 21 richtet sich nach der Größe der "Ecken" 22 bzw. 23 in radialer Richtung des Niets 2 bzw. 3 gemessen. Beim Ausführungsbeispiel nach Fig. 2 sind aufgrund der Verwendung eines prismatischen Kopfes ausgeprägte Ecken vorhanden. Während die Ecken des Ausführungsbeispieles nach den Fign. 3 und 4 gegen das freie Kopfende hin spitz auslaufen und gegebenenfalls gebrochen sein können, was durch die Kreisbogenteilstücke 25 in Fig. 4 angedeutet ist.

## Patentansprüche

1. Niet mit einem kreiszylindrischen Schaft und einem diesen quer zu seiner Längsachse überragenden Kopf, mit in Umfangsrichtung versetzt angeordneten, bis an den Schaft heranreichenden Kopfumfangs-Teilflächen, dadurch gekennzeichnet, daß zur Bildung von Führungsfläche (7) die Kopfumfangs-Teilflächen durch wenigstens vier in Umfangsrichtung versetzte, zur Schaftachse parallele Prismenflächen des als Mehrkantprisma ausgebildeten Kopfes (11) gebildet sind, oder daß bei einem die Gestalt eines mit seinem kleinen Durchmesser dem Schaft zugeordneten Kegelstumpfes (19) aufweisenden Nietkopfes (1), wobei der kleine Durchmesser dem Schaftdurchmesser entspricht, zur Bildung der Führungsflächen (7) an Kopfumfang in parallel zur Längsachse geführten Schnitten wenigstens vier Abschnitte (18) des Kegelstumpfes (19) abgetrennt sind.

2. Niet nach Anspruch 1, dadurch gekennzeichnet, daß die Führungsflächen (7) gleichmäßig am Kopfumfang verteilt sind.

3. Niet nach Anspruch 1 oder 2, dadurch gekennzeichnet, daß das freie Schaftende (5) scharfkantig ausgebildet ist und der Niet (2, 3) eine große Härte aufweist.

4. Nietführung (13, 14) an einer Nietvorrichtung für Niete (2, 3) gemäß einem der vorhergehenden Ansprüche, dadurch gekennzeichnet, daß mindestens vier Längskanten oder Mantellinien an Führungsstangen, Führungsleisten (21) oder dgl. vorgesehen sind, die zur Führung eines Nietschaftes, insbesondere gleichmäßig, am Umfang eines gedachten Kreiszylinders angeordnet sind, wobei die zwischen benachbarten Führungsstangen, Führungsleisten (21) oder dgl. befindlichen, außerhalb des gedachten Zylinders gelegenen Zwischenräume (24) Bewegungsbahnen für die den Nietschaft radial überragenden Kopfteile (22) des Niets bilden, und daß die Führungsstangen, Führungsleisten (21) oder dgl. zumindest ein Teil eines Führungskörpers sind.

## Claims

1. A rivet having a circularly cylindrical shank and a head projecting beyond it transversely to its longitudinal axis, with, staggered in a peripheral direction and extending as far as the shank partial faces around the periphery of the head, characterised in that to form guide surfaces (7) the partial faces on the periphery of the head are formed by at least four prismatic surfaces parallel with the shank axis and offset in a peripheral direction and forming part of the head (11) which is constructed as a polygonal prism, or in that in the case of a rivet head (1) in the form of a truncated cone (19) of which the small diameter is associated with the shank, the small diameter corresponding to the shank diameter, at least four portions (18) of the truncated cone (19) are separated by cuts extending parallel with the longitudinal axis to form the guide surfaces (7) on the periphery of the head.

2. A rivet according to Claim 1, characterised in that the guide faces (7) are regularly distributed around the periphery of the head.

3. A rivet according to Claim 1 or 2, characterised in that the free shank end (5) is sharply edged, the rivet (1) being of considerable hardness.

4. A rivet guide (13, 14) on a riveting apparatus for rivets (2, 3) according to one of the preceding Claims, characterised in that at least four longitudinal edges or generatrices are provided on guide rods (20), guide strips (21) or the like and which, to guide a rivet shank, particularly evenly, are disposed on the circumference of an imaginary circular cylinder, the intermediate spaces (24) disposed between adjacent guide rods (20), guide strips (21) or the like and outside the imaginary cylinder constituting movement paths for the head parts (22) of the rivet which project radially beyond the rivet shank, and in that the guide rods (20), guide strips (21) or the like are at least a part of the guide member.

## Revendications

1. Rivet comprenant un fût cylindrique droit et une tête saillant de celui-ci transversalement par rapport à son axe longitudinal, avec des surfaces partielles du pourtour de la tête, qui sont disposées avec décalage dans le sens périphérique et s'étendent jusqu'au fût, caractérisé par le fait que, pour constituer des surfaces de guidage (7), les surfaces partielles du pourtour de la tête sont formées par au moins quatre surfaces prismatiques décalées dans le sens périphérique et parallèles à l'axe du fût, de la tête (11) réalisée sous la forme d'un prisme polygonal; ou par le fait que, en présence d'une tête (1) de rivet ayant la configuration d'un tronc de cône (19) associé au fût par son petit diamètre, ce petit diamètre correspondant au diamètre du fût, au moins quatre tronçons (18) du tronc de cône (19) sont séparés sur le pourtour de la tête, en des coupes étendant parallèlement à l'axe longitudinal, en vue de constituer les surfaces de guidage (7).

2. Rivet selon la revendication 1, caractérisé par le fait que les surfaces de guidage (7) sont uniformément réparties sur le pourtour de la tête.

3. Rivet selon la revendication 1 ou 2, caractérisé par le fait que l'extrémité libre (5) du fût est réalisée à arête vive, et le rivet (1) présente une grande dureté.

4. Guide-rivets (13, 14) équipant un dispositif de rivetage associé à des rivets (2, 3) selon l'une des revendications précédentes, caractérisé par la présence d'au moins quatre arêtes longitudinales ou génératrices sur des tiges de guidage (20), barrettes de guidage (21) ou pièces similaires, qui sont notamment disposées de manière uniforme sur le pourtour d'un cylindre droit imaginaire, en vue de guider le fût d'un rivet, les espaces intercalaires (24), situés à l'extérieur du cylindre imaginaire et entre des tiges de guidage (20) barrettes de guidage (21) ou pièces similaires voisines, formant des trajets de mouvement pour les parties (22) de la tête du rivet saillant radialement du fût de ce rivet; et par le fait que les tiges de guidage (20), barrettes de guidage (21) ou pièces similaires représentent au moins une partie d'un corps de guidage.

Fig. 1

Fig. 3

Fig. 2

Fig. 4

Fig. 5